# EUROPEAN PATENT SPECIFICATION

(11) **EP 2 696 639 B1**
(45) Date of publication and mention of the grant of the patent: **04.03.2015**
(21) Application number: 12360060.3
(22) Date of filing: 06.08.2012
(51) Int. Cl.: H04W 72/12, H04B 7/02, H04W 36/18

(54) **Handover in multi-flow HSDPA**
Übergabe in mehrfluss-Datenverkehr HSDPA
Transfert dans un système HSDPA multi-flux

(43) Date of publication of application: 12.02.2014
(73) Proprietor: ALCATEL LUCENT, 92100 Boulogne-Billancourt (FR)
(72) Inventor: Wong, Shin Horng, Chippenham, Wiltshire SN14 0SP (GB); Puddle, Nicola, Swindon, Wiltshire SN04 0ND (GB)
(74) Representative: Sarup, David Alexander

(56) References cited:
- WO-A1-2012/006122
- ALCATEL-LUCENT: "Interaction of eSCC with Multiflow HSDPA", 3GPP DRAFT; R2-122644, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 14 May 2012 (2012-05-14), XP050606985, [retrieved on 2012-05-14]
- QUALCOMM EUROPE: "Improving Reliability of HS-PDSCH Serving Cell Change Procedure", 3GPP DRAFT; R1_080815, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080206, 6 February 2008 (2008-02-06), XP050109598, [retrieved on 2008-02-06]

## Description

### FIELD OF THE INVENTION

The present invention relates to methods of initiating handover, a base station, a network control node, user equipment and a computer program product.

### BACKGROUND

Single carrier wireless telecommunications networks are known. In those known networks, radio coverage is provided to user equipment, for example mobile telephones, by geographical area or cell. A base station is located in each geographical area to provide the required radio coverage. User equipment in the area served by a base station receives information and data from the base station and transmits information and data to the base station.

In a high-speed downlink packet access [HSDPA] telecommunications network, data and information is sent between the user equipment and the base station in data packets on a radio frequency carrier. Information and data transmitted by the base station to the user equipment occurs on radio frequency carriers known as downlink carriers. Information and data transmitted by user equipment to the base station occurs on radio frequency carriers known as uplink carriers. In addition to HSDPA is provided high speed uplink packet access [HSUPA].

In known wireless telecommunications networks operating in a single carrier mode, user equipment can move between geographical base station coverage areas or cells. Service provided to user equipment is overseen by a radio network controller [RNC]. The RNC communicates with user equipment and base stations and determines which base station each user equipment is primarily connected to. Furthermore, the RNC acts to control and communicate with a base station and user equipment when user equipment moves from one geographical area served by one base station to a geographical area served by another base station.

In known wireless telecommunication systems operating in a multicarrier mode, base station and user equipment each transmit simultaneously on more than one carrier. Furthermore user equipment and base stations can receive simultaneously on more than one carrier. Provision of more than one downlink carriers, for example on 4 frequency carriers, allows for an increase in data throughput to the user equipment. Networks having more than 2 carriers may be referred to as multi cell, multi-point or multi-flow HSDPA networks. The term multicarrier is envisaged to cover the case where 2, 3, 4 or more downlink or uplink carriers are provided in a network.

WO 2012/006122 describes mobility in a Multi - Point HSDPA network capable of downlink aggregation. Some aspects of the disclosure provide modified mobility events utilized for altering (adding/removing secondary cells at/from) the Active Set for a UE. Here, the addition of a cell to the Active Set can coincide with making that cell a secondary serving cell when an event 1A happens. Further, the deletion of a secondary serving cell from the Active Set can coincide with switching off the Multi - Point HSDPA mode when an event IB happens. Still further, a modified mobility event for an HSDPA serving cell change can be utilized to swap a primary serving cell and a secondary serving cell.

Although the provision of multi-flow transmissions increases data throughput, providing such functionality may have associated problems. Accordingly, it is desired to improve the operation of such wireless telecommunication networks.

### SUMMARY

According to a first aspect, there is provided a method of initiating handover between cells of a High-Speed Downlink Packet Access wireless telecommunications network as claimed in claim 1.

The first aspect recognizes that performing handover when using multi-flow HSDPA having a serving cell and an assisting cell can cause problems. In particular, if fast fading occurs, then there may not be sufficient time to enable level 3 messaging by a radio network controller to transmit radio resource configuration messaging to both the target base station and the user equipment to enable the user equipment to connect to the target base station in time before it loses connection with the current serving base station. Although it may be possible to preconfigure the user equipment with sufficient configuration information relating to base stations which may at some time be connected to, this consumes significant resources within the user equipment. This problem is exacerbated in multi-flow HSDPA where not only would potential serving base stations need to be preconfigured but also assisting base stations would need to be preconfigured. This significantly increases the resources required by the user equipment to store such preconfigurations. Also, subframe pairings between potential combinations of serving cells and assisting serving cells would also need to be determined and preconfigured. Again, all of this requires significant resources to be provided by the user equipment.

Accordingly, a method of initiating handover between cells of a high-speed downlink packet access wireless telecommunications network is provided. Such a network is one where user equipment may receive data streams from both a serving cell and one or more assisting serving cells on a shared frequency band. The method may comprise the step of transmitting, following reception of a message from a controlling network node which identifies that a change in serving cell is required, a level 1 message from a target base station to the user equipment. The message instructs the user equipment to handover to the target cell. The message may also indicate to the user equipment whether to utilize any of the currently used assisting serving cells. Such an approach enables the handover to occur. Also, by reusing existing cells, the need for a preconfiguration of the user equipment with configuration for the assisting serving cells is obviated.

In one embodiment, the message indicates to the user equipment to stop utilising some of the at least one assisting serving cell. It will be appreciated that it is possible to indicate that the user equipment should cease utilizing one of the assisting serving cells by omitting the details of that assisting serving cell from the message.

In one embodiment, the message indicates to the user equipment to stop utilising each of the at least one assisting serving cell and instead to switch to receiving a data stream from only the target serving cell. Accordingly, the user equipment may be instructed to switch to single cell reception. Multi flow transmissions may be re-established thereafter.

In one embodiment, the message indicates to the user equipment to continue to utilise some of the at least one assisting serving cell and to receive a data stream on the common frequency band from both the target serving cell and the some of the at least one assisting serving cell.

In one embodiment, the message indicates to the user equipment to utilise one of the at least one assisting serving cell as the target serving cell. Accordingly, the user equipment may be instructed to handover to one of its currently assisting serving cells. Again, this avoids the need for any preconfiguration since the user equipment will already have configuration information for that serving cell.

In one embodiment, the message indicates to the user equipment to utilise the serving cell as one of the at least one assisting serving cell. Accordingly, the user equipment may be instructed to utilise its current serving cell as an assisting serving cell. Again, this avoids the need for any preconfiguration since the user equipment will already have configuration information for that serving cell.

The message indicates to the user equipment a revised subframe pairing between the target serving cell and each of some of the at least one assisting serving cell. Accordingly, the message may also indicate the correct subframe pairing for the new target serving cell and assisting serving cells.

In one embodiment, the level 1 message comprises an HS-SCCH order.

According to a second aspect, there is provided a base station as claimed in claim 8.

In one embodiment, the message indicates to the user equipment to stop utilising some of the at least one assisting serving cell.

In one embodiment, the message indicates to the user equipment to stop utilising each of the at least one assisting serving cell and instead to switch to receiving a data stream from only the target serving cell.

In one embodiment, the message indicates to the user equipment to continue to utilise some of the at least one assisting serving cell and to receive a data stream on the common frequency band from both the target serving cell and the some of the at least one assisting serving cell.

In one embodiment, the message indicates to the user equipment to utilise one of the at least one assisting serving cell as the target serving cell.

In one embodiment, the message indicates to the user equipment to utilise the serving cell as one of the at least one assisting serving cell.

The message indicates to the user equipment a revised subframe pairing between the target serving cell and each of some of the at least one assisting serving cell.

In one embodiment, the level 1 message comprises an HS-SCCH order.

According to a third aspect, there is provided a method of initiating handover between cells of a High-Speed Downlink Packet Access wireless telecommunications network as claimed in claim 9.

In one embodiment, the message indicates that the user equipment should stop utilising some of the at least one assisting serving cell.

In one embodiment, the message indicates that the user equipment should stop utilising each of the at least one assisting serving cell and instead to switch to receiving a data stream from only the target serving cell.

In one embodiment, the message indicates that the user equipment should continue to utilise some of the at least one assisting serving cell and receive a data stream on the common frequency band from both the target serving cell and the some of the at least one assisting serving cell.

In one embodiment, the message indicates that the user equipment should utilise one of the at least one assisting serving cell as the target serving cell.

In one embodiment, the message indicates that the user equipment should utilise the serving cell as one of the at least one assisting serving cell.

The message indicates a revised subframe pairing between the target serving cell and each of some of the at least one assisting serving cell.

According to a fourth aspect, there is provided a network controller node as claimed in claim 10.

In one embodiment, the message indicates that the user equipment should stop utilising some of the at least one assisting serving cell.

In one embodiment, the message indicates that the user equipment should stop utilising each of the at least one assisting serving cell and instead to switch to receiving a data stream from only the target serving cell.

In one embodiment, the message indicates that the user equipment should continue to utilise some of the at least one assisting serving cell and receive a data stream on the common frequency band from both the target serving cell and the some of the at least one assisting serving cell.

In one embodiment, the message indicates that the user equipment should utilise one of the at least one assisting serving cell as the target serving cell.

In one embodiment, the message indicates that the user equipment should utilise the serving cell as one of the at least one assisting serving cell.

The message indicates a revised subframe pairing between the target serving cell and each of some of the at least one assisting serving cell.

According to a fifth aspect, there is provided a user equipment method of initiating handover between cells of a High-Speed Downlink Packet Access wireless as claimed in claim 11.

In one embodiment, the message indicates that utilising some of the at least one assisting serving cell should cease.

In one embodiment, the message indicates that utilising each of the at least one assisting serving cell should cease and instead a data stream should be received from only the target serving cell.

In one embodiment, the message indicates that some of the at least one assisting serving cell should continue to be utilised and that a data stream on the common frequency band should be received from both the target serving cell and the some of the at least one assisting serving cell.

In one embodiment, the message indicates that one of the at least one assisting serving cell should be utilised as the target serving cell.

In one embodiment, the message indicates that the serving cell should be utilised as one of the at least one assisting serving cell.

The message indicates a revised subframe pairing between the target serving cell and each of some of the at least one assisting serving cell.

In one embodiment, the level 1 message comprises an HS-SCCH order.

According to a sixth aspect, there is provided user equipment operable to initiate handover between cells of a High-Speed Downlink Packet Access wireless telecommunications network as claimed in claim 12.

In one embodiment, the message indicates that utilising some of the at least one assisting serving cell should cease.

In one embodiment, the message indicates that utilising each of the at least one assisting serving cell should cease and instead a data stream should be received from only the target serving cell.

In one embodiment, the message indicates that some of the at least one assisting serving cell should continue to be utilised and that a data stream on the common frequency band should be received from both the target serving cell and the some of the at least one assisting serving cell.

In one embodiment, the message indicates that one of the at least one assisting serving cell should be utilised as the target serving cell.

In one embodiment, the message indicates that the serving cell should be utilised as one of the at least one assisting serving cell.

The message indicates a revised subframe pairing between the target serving cell and each of some of the at least one assisting serving cell.

In one embodiment, the level 1 message comprises an HS-SCCH order.

According to a seventh aspect, there is provided a computer program product operable, when executed on a computer to perform the method steps of the first, third or fifth aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example of an inter-base station multi-flow HSDPA arrangement;
Figure 2 illustrates user equipment receiving HSDPA transmissions from 2 cells;
Figure 3 illustrates a mobility event;
Figure 4 illustrates the subframe timing between cells; and
Figure 5 illustrates message flows according to one embodiment.

### DESCRIPTION OF THE EMBODIMENTS

### Overview

Before discussing the embodiments in any more detail, first an overview will be provided. Embodiments provide an arrangement which facilitates handover between cells of a high-speed downlink packet access wireless telecommunications network where user equipment is receiving high-speed downlink packet access transmissions from a serving cell and one or more assisting serving cells. When a controlling network node determines that handover to an identified target serving cell is required, a level 1 message is transmitted directly from the target base station to the user equipment instructing the user equipment to handover to the target serving cell and also indicating whether or not the user equipment should continue to remain connected to one or more of the assisting serving cells. In particular, an indicator may be included in the HS-SCCH order for enhanced serving cell change indicating whether the user equipment should maintain or discard the existing serving cell and any existing assisting serving cells where more than one assisting serving cell exists.

When an assisting serving cell is to be maintained, the order from the target serving cell will also contain subframe pairing information for the user equipment operating with the target serving cell. The subframe pairing information can be determined by the network since the network has knowledge of the frame boundary time offset between cells in the active set and the serving cell based on user equipment measuring reports. Since the assisting serving cell comes from one of the cells in the active set, the network can readily work out the time difference of the existing assisting serving cell relative to that of the target serving cell.

It will be appreciated that the subframe pairing information may also be provided for non-enhanced serving cell change handovers. Here, the subframe pairing information is provided with the radio resource connection reconfiguration message to handover the user equipment serving cell and also to setup or maintain an assisting serving cell.

It may be that the target serving cell is one of the existing serving cells. In the circumstances, it is also possible that the existing serving cell becomes a new assisting serving cell. This results in a swap between a serving cell and an assisting serving cell. The user equipment would in these circumstances have the configuration information for both cells and therefore a swap in the serving and assisting cell can be performed using an enhanced serving cell change handover with no or very little preconfiguration. Hence, in this embodiment, the order would also contain an indication of whether the user equipment can use the previous serving cell as a new assisting serving cell and vice-versa.

It accordingly, it can be seen that handover can be initiated rapidly with little or no preconfiguration, thereby reducing the amount of preconfiguration information which needs to be stored by the user equipment whilst also reducing the probability that handover will fail and therefore calls will be dropped.

### Multi-flow high-speed downlink packet access

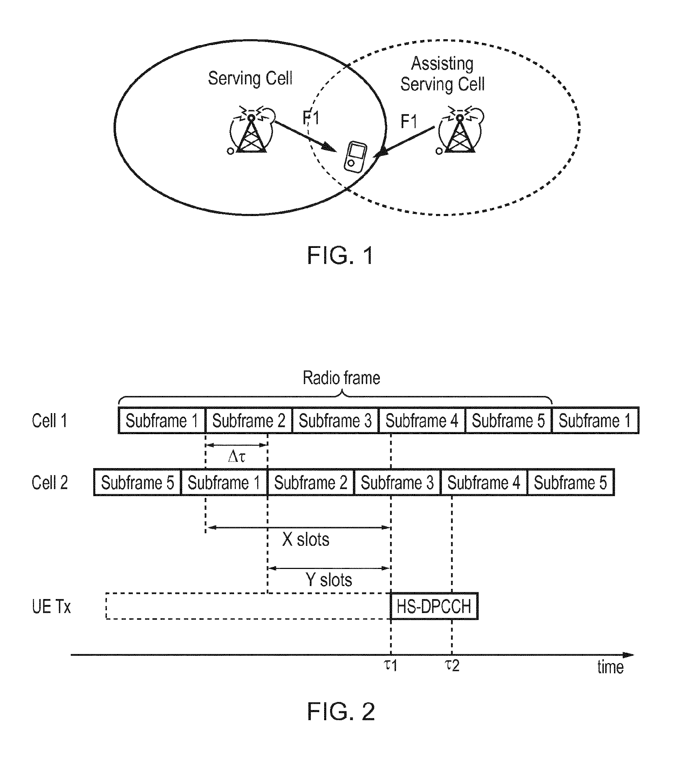

By way of background, in multi-flow HSDPA [sometimes referred to as multipoint HSDPA], user equipment receives 2 or more independent HSDPA streams from different cells. The cells can belong to the same base station or different base stations. The cell that the user equipment is attached to is the serving cell, whilst the other cells that provide HSDPA streams to the user equipment are known as assisting serving cells. An example of an inter-base station multi-flow HSDPA arrangement is shown in Figure 1.

Cell handover in the cell_DCH state is instructed by the network using radio resource connection [RRC] signalling which is applied immediately by the ueser equipment, unlike preconfiguration where information is stored by user equipment for possible future use. The RRC message signalled is usually large and therefore can take significant time for the user equipment to fully receive this message. Given that the user equipment is typically at the cell boundary during handover, it is possible that the user equipment loses its radio connection with the existing serving cell whilst receiving the RRC message.

With this in mind, an enhanced serving cell change procedure exists to allow fast handover. In enhanced serving cell change, the user equipment is preconfigured with the necessary configurations to operate with potential serving cells. Such potential serving cells are typically all the cells in the user equipment active set.

It will be appreciated that the term "preconfiguration" refers to the speculative provision of configuration information which may be used at some point in time in the future by user equipment, or may never in fact be used. This differs from the provision of configuration information provided when a decision is taken to handover user equipment to a cell.

During handover, the network informs the target cell to send an HS-SCCH order to the user equipment to instruct the user equipment to handover to it. When the user equipment receives the order from the target cell, it hands over to this target cell using preconfigured information without waiting for the RRC configuration messages, thereby avoiding the risk of losing radio connection with the existing serving cell.

In MF-HSDPA, there is more than one serving cell [on the same frequency] and, hence, the mobility process also needs to consider the change in the assisting serving cell. Supporting enhanced serving cell change when MF-HSDPA transmissions occur is possible, but this is presents difficulties.

First, if each of the potential assisting cells are to be preconfigured, then the amount of preconfiguration required for the assisting serving cells is higher than that for the serving cells. This can cause resource problems for user equipment.

Secondly, the subframe pairing between the serving cell and the assisting serving cell can change. This is because in wideband code division multiple access [WCDMA], cells supported by different base stations are not time synchronized and so the radio frames between 2 different base station cells are not aligned. Furthermore, the user equipment experiences different propagation delays and the timeshift between a base station and the user equipment clock also changes the time offset between subframes of the cells.

This is illustrated in Figure 2 where the user equipment receives HSDPA transmissions from 2 cells [cell 1 and cell 2]. Here, the reception from cell 2 lags those from cell 1 by Δτ. The user equipment acknowledgment transmissions confirming receipt of the subframes over the uplink high-speed dedicated physical control channel [HS-DPCCH] contains no subframe numbering. That is to say that the acknowledgment message does not indicate the numbers of the subframes that has been correctly or incorrectly received. Instead, a base station expects the user equipment to transmit the HS-DPCCH acknowledgement message corresponding to a subframe at a particular time. For example, as shown in Figure 2, the base station supporting cell 1 expects the user equipment to acknowledge subframe 1 X slots [for example 7.5 slots] after the end of the subframe 1.

In MF-HSDPA, a single HS-DPCCH acknowledgment is sent to both cells [i.e. the serving cell and the assisting serving cell]. As also shown in Figure 2, cell 1 receives the HS-DPCCH acknowledgment at the correct time and therefore knows that this HS-DPCCH is acknowledgment relates to subframe 1. However, cell 2 receives the HS-DPCCH acknowledgment after Y slots [and it can be seen that Y does not equal X in this example because the subframe boundaries are not aligned]. Hence, with no further information, the base station associated with cell 2 would assume that the HS-DPCCH acknowledgment related to the wrong subframe.

To accommodate this the user equipment pairs the subframes and this pairing is configured by the network based on the radio frame time difference [Δτ] as reported by the user equipment. The pairing is performed based on a maximum time overlap rule. That is to say the 2 subframes with the most overlap in time are paired. As shown in Figure 2, subframe 1 of cell 1 has more time overlap with subframe 5 of cell 2 than it has with subframe 1 of cell 2. Therefore, subframe 1 of cell 1 is paired with subframe 5 of cell 2. The user equipment uses the serving cell [for example cell 1] as the reference time. Hence, the user equipment would send the HS-DPCCH acknowledgment X slots [for example 7.5 slots] after the end of the subframe of the serving cell [i.e. 7.5 slots after the end of subframe 1 of cell 1].

The assisting cells are made aware of this pairing and the time difference and therefore can adjust their HS-DPCCH acknowledgment reception accordingly. Hence, when receiving the HS-DPCCH acknowledgment 7.5 slots after the end of subframe 1 of cell 1, cell 2 will determine that this acknowledgment also relates to subframe 5 of cell 2.

It will be appreciated that the subframe pairing can change when the user equipment moves due to changes in propagation delays and will almost certainly change when the user equipment changes the serving cell. Hence, there is the need to inform the user equipment of the new pairing when it changes serving cell.

### Example Mobility Event

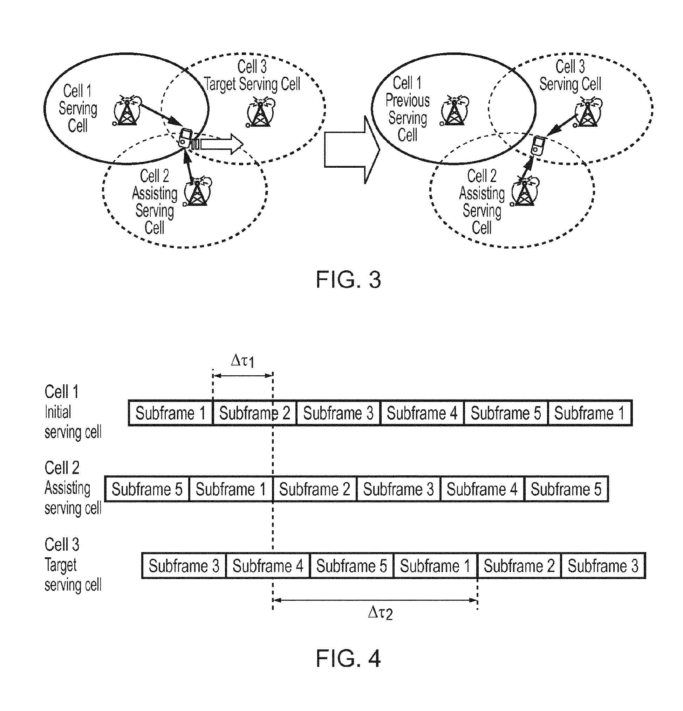

Although, as shown in Figure 3, it is possible to limit the handover to the case where the assisting serving cell does not change when a change to the serving cell is made [for example the user equipment changes in serving cell from cell 1 to cell 3 while still maintaining cell 2 as its assisting serving cell]. In these circumstances, there is no need for the user equipment to be preconfigured for the existing assisting serving cell since it already has configuration information for the assisting serving cell. Also, it is not necessary to include preconfiguration information relating to other potential assisting serving cells; it will be appreciated that such preconfiguration information is information which is provided to user equipment which may potentially be used at a future point, rather than configuration information which is provided to user equipment when an actual handover to a cell is required.

However, even this approach presents issues such as indicating whether to maintain the existing assisting serving cell during enhance serving cell change and also dealing with the changes to subframe pairing.

As mentioned above, the user equipment shown in Figure 3 is performing MF-HSDPA transmissions with cell 1 and cell 2, where cell 1 is the serving cell and cell 2 is the assisting serving cell. It will be appreciated that more than one assisting serving cell may be provided. The subframe timing between cell 1 and cell 2 is illustrated in Figure 4. It can be seen that subframe 1 of cell 1 has a maximum time overlap with subframe 5 of cell 2. Hence, these 2 subframes are paired for the HS-DPCCH acknowledgment transmission.

The user equipment moves towards cell 3 and triggers Event 1d when transmissions from cell 3 are stronger than transmissions from cell 1. This leads to the user equipment sending a measurement report to the network. In this measurement report, the time difference in radio frame boundaries between cell 3 and cell 1 are also updated.

Based on the measurement report, the network decides that the user equipment should handover it serving cell from cell 1 to cell 3. The network also determines the time difference between the frame boundaries of cell 3 and cell 2 to be Δτ2 and that subframe 1 of cell 3 has a maximum time overlap with subframe 3 of cell 2. Therefore, these 2 subframes of paired for the HS-DPCCH acknowledgment transmission.

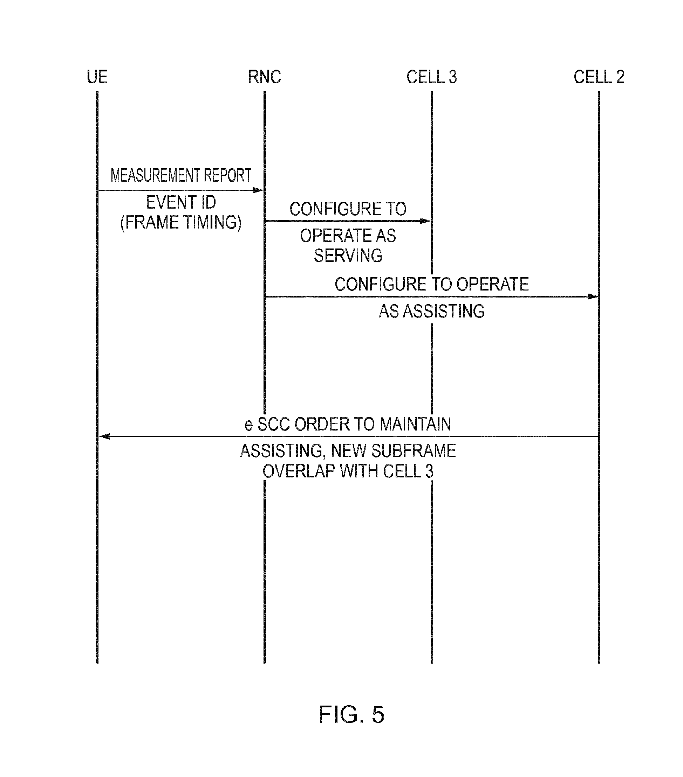

The network sends instruction to all the cells [cell 1, cell 2 and cell 3] detailing the new configuration [i.e. that cell 3 is to be the target serving cell while cell 2 is to be maintained as the assisting serving cell]. Cell 3 then sends an enhanced serving cell change HS-SCCH order to the user equipment instructing it to hand over to it. In this order, cell 3 also indicates that the user equipment shall continue to maintain its existing assisting serving cell [cell 2] and provides information on the updated subframe pairing, as illustrated in Figure 5.

Accordingly, it can be seen that this approach allows the benefits of enhanced serving cell change to be used in multi-flow HSDPA without the need for preconfiguration at the user equipment. It also enables the subframe pairing to be updated following enhanced serving cell change.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of initiating handover between cells of a High-Speed Downlink Packet Access wireless telecommunications network where user equipment receives a data stream on a common frequency from both a serving cell and at least one assisting serving cell, said method comprising:
in response to a received message from a controlling network node identifying that a change in serving cell is required, transmitting a level 1 message from a target serving base station supporting a target serving cell to said user equipment instructing said user equipment to handover to said target serving cell and indicating to said user equipment whether to continue to utilise each of said at least one assisting serving cell, **characterised by** said message indicating to said user equipment a revised subframe pairing between said target serving cell and each of some of said at least one assisting serving cell.

2. The method of claim 1, wherein said message indicates to said user equipment to stop utilising some of said at least one assisting serving cell.

3. The method of claim 1 or 2, wherein said message indicates to said user equipment to stop utilising each of said at least one assisting serving cell and instead to switch to receiving a data stream from only said target serving cell.

4. The method of any preceding claim, wherein said message indicates to said user equipment to continue to utilise some of said at least one assisting serving cell and to receive a data stream on said common frequency band from both said target serving cell and said some of said at least one assisting serving cell.

5. The method of any preceding claim, wherein said message indicates to said user equipment to utilise one of said at least one assisting serving cell as said target serving cell.

6. The method of any preceding claim, wherein said message indicates to said user equipment to utilise said serving cell as one of said at least one assisting serving cell.

7. The method of any preceding claim, wherein said level 1 message comprises an HS-SCCH order.

8. A base station operable to initiate handover between cells of a High-Speed Downlink Packet Access wireless telecommunications network where user equipment receives a data stream on a common frequency from both a serving cell and at least one assisting serving cell, said serving network node comprising:
transmission logic operable, in response to a received message from a controlling network node identifying that a change in serving cell is required, to transmit a level 1 message to said user equipment instructing said user equipment to handover to a target serving cell supported by said base station and indicating to said user equipment whether to continue to utilise each of said at least one assisting serving cell **characterised by** the message indicating a revised subframe pairing between the target serving cell and each of some of the at least one assisting serving cell.

9. A method of initiating handover between cells of a High-Speed Downlink Packet Access wireless telecommunications network where user equipment receives a data stream on a common frequency from both a serving cell and at least one assisting serving cell, said method comprising:
transmitting a message from a controlling network node to a target base station supporting a target serving cell identifying that a change in serving cell to said target serving cell is required and indicating whether to continue to utilise each of said at least one assisting serving cell **characterised by** the message indicating a revised subframe pairing between the target serving cell and each of some of the at least one assisting serving cell.

10. controlling network node operable to initiate handover between cells of a High-Speed Downlink Packet Access wireless telecommunications network where user equipment receives a data stream on a common frequency from both a serving cell and at least one assisting serving cell, said network controller node comprising:
transmission logic operable to transmit a message to a target base station supporting a target serving cell identifying that a change in serving cell to said target serving cell is required and indicating whether to continue to utilise each of said at least one assisting serving cell **characterised by** the message indicating a revised subframe pairing between the target serving cell and each of some of the at least one assisting serving cell.

11. A user equipment method of initiating handover between cells of a High-Speed Downlink Packet Access wireless telecommunications network where said user equipment receives a data stream on a common frequency from both a serving cell and at least one assisting serving cell, said method comprising:
receiving a level 1 message from a target serving base station supporting a target serving cell instructing said user equipment to handover to said target serving cell and indicating whether to continue to utilise each of said at least one assisting serving cell **characterised by** the message indicating a revised subframe pairing between the target serving cell and each of some of the at least one assisting serving cell.

12. User equipment operable to initiate handover between cells of a High-Speed Downlink Packet Access wireless telecommunications network where said user equipment receives a data stream on a common frequency from both a serving cell and at least one assisting serving cell, said user equipment comprising:
reception logic operable to receive a level 1 message from a target serving base station supporting a target serving cell instructing said user equipment to handover to said target serving cell and indicating whether to continue to utilise each of said at least one assisting serving cell **characterised by** said message indicating to said user equipment a revised subframe pairing between said target serving cell and each of some of said at least one assisting serving cell.

13. A computer program product operable, when executed on a computer, to perform the method steps of any one of claims 1 to 7, 9 or 11.

## Patentansprüche

1. Verfahren zur Initiierung eines Handovers zwischen Zellen eines drahtlosen Telekommunikationsnetzwerks mit Hochgeschwindigkeits-Downlink-Paketzugriff, wobei ein Teilnehmergerät sowohl von einer Versorgungszelle als auch von mindestens einer assistierenden Versorgungszelle einen Datenfluss auf einer gemeinsamen Frequenz empfängt, wobei das Verfahren umfasst:
In Reaktion auf eine von einem steuernden Netzknoten empfangene Nachricht, welche identifiziert, dass ein Wechsel der Versorgungszelle erforderlich ist, Übertragen einer Schicht 1-Nachricht von einer Ziel-Versorgungsbasisstation, die eine Ziel-Versorgungszelle unterstützt, an das besagte Teilnehmergerät, welche das besagte Teilnehmergerät anweist, zu der besagten Ziel-Versorgungszelle überzugehen und dem besagten Teilnehmergerät anzeigt, ob es weiterhin eine jede der besagten mindestens einen assistierenden Versorgungszelle benutzen soll, **dadurch gekennzeichnet, dass** die besagte Nachricht dem besagten Teilnehmergerät eine geänderte Teilrahmenpaarung zwischen der besagten Ziel-Versorgungszelle und einer jeden von einigen der besagten mindestens einen assistierenden Versorgungszelle anzeigt.

2. Verfahren nach Anspruch 1, wobei die besagte Nachricht dem besagten Teilnehmergerät anzeigt, dass es aufhören soll, einige der besagten mindestens einen assistierenden Versorgungszelle zu benutzen.

3. Verfahren nach Anspruch 1 oder 2, wobei die besagte Nachricht dem besagten Teilnehmergerät anzeigt, dass es aufhören soll, eine jede der besagten mindestens einen assistierenden Versorgungszelle zu benutzen und stattdessen auf den Empfang eines Datenflusses lediglich von der besagten Ziel-Versorgungszelle umschalten soll.

4. Verfahren nach einem beliebigen der vorstehenden Ansprüche, wobei die besagte Nachricht dem besagten Teilnehmergerät anzeigt, dass es weiterhin einige der besagten mindestens einen assistierenden Versorgungszelle benutzen soll, um einen Datenfluss auf dem besagten gemeinsamen Frequenzband sowohl von der besagten Ziel-Versorgungszelle als auch von einigen der besagten mindestens einen assistierenden Versorgungszelle zu empfangen.

5. Verfahren nach einem beliebigen der vorstehenden Ansprüche, wobei die besagte Nachricht dem besagten Teilnehmergerät anzeigt, dass es eine der besagten mindestens einen assistierenden Versorgungszelle als die besagte Ziel-Versorgungszelle benutzen soll.

6. Verfahren nach einem der vorstehenden Ansprüche, wobei die besagte Nachricht dem besagten Teilnehmergerät anzeigt, dass es die besagte Versorgungszelle als eine der besagten mindestens einen assistierenden Versorgungszelle benutzen soll.

7. Verfahren nach einem beliebigen der vorstehenden Ansprüche, wobei die besagte Schicht 1-Nachricht einen HS-SCCH-Befehl enthält.

8. Basisstation, betreibbar, um einen Handover zwischen Zellen eines drahtlosen Telekommunikationsnetzwerks mit Hochgeschwindigkeits-Downlink-Paketzugriff zu initiieren, wobei ein Teilnehmergerät sowohl von einer Versorgungszelle als auch von mindestens einer assistierenden Versorgungszelle einen Datenfluss auf einer gemeinsamen Frequenz empfängt, wobei der besagte Versorgungsnetzknoten umfasst:
Übertragungslogik, betreibbar, um in Reaktion auf eine von einem steuernden Netzknoten empfangene Nachricht, welche identifiziert, dass ein Wechsel der Versorgungszelle erforderlich ist, eine Schicht 1-Nachricht von einer Ziel-Versorgungsbasisstation, die eine Ziel-Versorgungszelle unterstützt, an das besagte Teilnehmergerät zu übertragen, welche das besagte Teilnehmergerät anweist, zu der besagten von der besagten Basisstation unterstützten Ziel-Versorgungszelle zu wechseln und dem besagten Teilnehmergerät anzeigt, ob es weiterhin eine jede der besagten mindestens einen assistierenden Versorgungszelle benutzen soll, **dadurch gekennzeichnet, dass** die besagte Nachricht eine geänderte Teilrahmenpaarung zwischen der besagten Ziel-Versorgungszelle und einer jeden von einigen der besagten mindestens einen assistierenden Versorgungszelle anzeigt.

9. Verfahren zur Initiierung eines Handovers zwischen Zellen eines drahtlosen Telekommunikationsnetzwerks mit Hochgeschwindigkeits-Downlink-Paketzugriff, wobei ein Teilnehmergerät sowohl von einer Versorgungszelle als auch von mindestens einer assistierenden Versorgungszelle einen Datenfluss auf einer gemeinsamen Frequenz empfängt, wobei das Verfahren umfasst:
Übertragen, von einem steuernden Netzknoten an eine eine Ziel-Versorgungszelle unterstützende Ziel-Basisstation, einer Nachricht, welche identifiziert, dass ein Wechsel der Versorgungszelle zu der besagten Ziel-Versorgungszelle erforderlich ist und anzeigt, ob eine jede der besagten mindestens einen assistierenden Versorgungszelle weiterhin benutzt werden soll, **dadurch gekennzeichnet, dass** die Nachricht eine geänderte Teilrahmenpaarung zwischen der besagten Ziel-Versorgungszelle und einer jeden von einigen der besagten mindestens einen assistierenden Versorgungszelle anzeigt.

10. Steuernder Netzknoten, betreibbar, um einen Handover zwischen Zellen eines drahtlosen Telekommunikationsnetzwerks mit Hochgeschwindigkeits-Downlink-Paketzugriff zu initiieren, wobei ein Teilnehmergerät sowohl von einer Versorgungszelle als auch von mindestens einer assistierenden Versorgungszelle einen Datenfluss auf einer gemeinsamen Frequenz empfängt, wobei der besagte steuernde Netzknoten umfasst:
Übertragungslogik, betreibbar, um eine Nachricht an eine eine Ziel-Versorgungszelle unterstützende Ziel-Basisstation zu übertragen, welche identifiziert, dass ein Wechsel von der Versorgungszelle zu der besagten Ziel-Versorgungszelle erforderlich ist und anzeigt, ob weiterhin eine jede der besagten mindestens einen assistierenden Versorgungszelle benutzt werden soll, **dadurch gekennzeichnet, dass** die Nachricht eine geänderte Teilrahmenpaarung zwischen der Ziel-Versorgungszelle und einer jeden von einigen der mindestens einen assistierenden Versorgungszelle anzeigt.

11. Teilnehmergerätverfahren zur Initiierung eines Handovers zwischen Zellen eines drahtlosen Telekommunikationsnetzwerks mit Hochgeschwindigkeits-Downlink-Paketzugriff, wobei das besagte Teilnehmergerät sowohl von einer Versorgungszelle als auch von mindestens einer assistierenden Versorgungszelle einen Datenfluss auf einer gemeinsamen Frequenz empfängt, wobei das besagte Verfahren umfasst:
Empfangen, von einer eine Ziel-Versorgungszelle unterstützenden Ziel-Versorgungsbasisstation, einer Schicht 1-Nachricht, welche das besagte Teilnehmergerät anweist, zu der besagten Ziel-Versorgungszelle zu wechseln, und anzeigt, ob eine jede der besagten mindestens einen assistierenden Versorgungszelle weiterhin benutzt werden soll, **dadurch gekennzeichnet, dass** die Nachricht eine geänderte Teilrahmenpaarung zwischen der besagten Ziel-Versorgungszelle und einer jeden von einigen der besagten mindestens einen assistierenden Versorgungszelle anzeigt.

12. Teilnehmergerät, betreibbar, um einen Handover zwischen Zellen eines drahtlosen Telekommunikationsnetzwerks mit Hochgeschwindigkeits-Downlink-Paketzugriff zu initiieren, wobei das besagte Teilnehmergerät sowohl von einer Versorgungszelle als auch von mindestens einer assistierenden Versorgungszelle einen Datenfluss auf einer gemeinsamen Frequenz empfängt, wobei das besagte Teilnehmergerät umfasst:
Empfangslogik, betreibbar, um von einer eine Ziel-Versorgungszelle unterstützenden Ziel-Versorgungsbasisstation eine Schicht 1-Nachricht zu empfangen, welche das besagte Teilnehmergerät anweist, zu der besagten Ziel-Versorgungszelle zu wechseln und anzeigt, ob weiterhin eine jede der besagten mindestens einen assistierenden Versorgungszelle benutzt werden soll, **dadurch gekennzeichnet, dass** die besagte Nachricht dem besagten Teilnehmergerät eine geänderte Teilrahmenpaarung zwischen der Ziel-Versorgungszelle und einer jeden von einigen der mindestens einen assistierenden Versorgungszelle anzeigt.

13. Computerprogramm-Produkt, betreibbar, um die Verfahrensschritte gemäß einem der Ansprüche 1 bis 7, 9 oder 11 durchzuführen, wenn es auf einem Computer ausgeführt wird.

## Revendications

1. Procédé de déclenchement de transfert entre des cellules d'un réseau de télécommunication sans fil d'accès par paquets en liaison descendante haut débit où un équipement utilisateur reçoit un flux de données sur une fréquence commune à partir d'une cellule de desserte et d'au moins une cellule de desserte d'assistance, ledit procédé comprenant l'étape suivante :
en réponse à un message reçu provenant d'un noeud de réseau de commande identifiant qu'un changement de la cellule de desserte est nécessaire, transmettre un message de niveau 1 à partir d'une station de base de desserte cible prenant en charge une cellule de desserte cible audit équipement utilisateur ordonnant audit équipement utilisateur d'effectuer un transfert vers ladite cellule de desserte cible et indiquant audit équipement utilisateur s'il faut continuer à utiliser chacune de ladite ou desdites cellules de desserte d'assistance, **caractérisé en ce que** ledit message indique audit équipement utilisateur un appariement de sous-trames révisé entre ladite cellule de desserte cible et chacune parmi certaines de ladite ou desdites cellules de desserte d'assistance.

2. Procédé selon la revendication 1, dans lequel ledit message indique audit équipement utilisateur d'arrêter d'utiliser certaines de ladite ou desdites cellules de desserte d'assistance.

3. Procédé selon la revendication 1 ou 2, dans lequel ledit message indique audit équipement utilisateur d'arrêter l'utilisation de chacune de ladite ou desdites cellules de desserte d'assistance et au lieu de cela de commuter sur la réception d'un flux de données seulement à partir de ladite cellule de desserte cible.

4. Procédé selon l'une quelconque des revendications précédentes, dans lequel ledit message indique audit équipement utilisateur de continuer à utiliser certaines de ladite ou desdites cellules de desserte d'assistance et de recevoir un flux de données sur ladite bande de fréquence commune à partir de ladite cellule de desserte cible et desdites certaines de ladite ou desdites cellules de desserte d'assistance.

5. Procédé selon l'une quelconque des revendications précédentes, dans lequel ledit message indique audit équipement utilisateur d'utiliser une parmi ladite ou lesdites cellules de desserte d'assistance comme ladite cellule de desserte cible.

6. Procédé selon l'une quelconque des revendications précédentes, dans lequel ledit message indique audit équipement utilisateur d'utiliser ladite cellule de desserte comme ladite ou lesdites cellules de desserte d'assistance.

7. Procédé selon l'une quelconque des revendications précédentes, dans lequel ledit message de niveau 1 comprend un ordre HS-SCCH.

8. Station de base permettant de déclencher un transfert entre des cellules d'un réseau de télécommunication sans fil d'accès par paquets en liaison descendante haut débit où un équipement utilisateur reçoit un flux de données sur une fréquence commune à partir d'une cellule de desserte et d'au moins une cellule de desserte d'assistance, ledit noeud de réseau de desserte comprenant :
une logique de transmission permettant, en réponse à un message reçu provenant d'un noeud de réseau de commande identifiant qu'un changement de la cellule de desserte est nécessaire, de transmettre un message de niveau 1 audit équipement utilisateur ordonnant audit équipement utilisateur d'effectuer un transfert vers une cellule de desserte cible prise en charge par ladite station de base et indiquant audit équipement utilisateur s'il faut continuer à utiliser chacune de ladite ou desdites cellules de desserte d'assistance, **caractérisée en ce que** le message indique un appariement de sous-trames révisé entre la cellule de desserte cible et chacune parmi certaines de ladite ou desdites cellules de desserte d'assistance.

9. Procédé de déclenchement de transfert entre des cellules d'un réseau de télécommunication sans fil d'accès par paquets en liaison descendante haut débit où un équipement utilisateur reçoit un flux de données sur une fréquence commune à partir d'une cellule de desserte et d'au moins une cellule de desserte d'assistance, ledit procédé comprenant l'étape suivante :
transmettre un message entre un noeud de réseau de commande et une station de base cible prenant en charge une cellule de desserte cible identifiant qu'un changement de cellule de desserte en ladite cellule de desserte cible est nécessaire et indiquant s'il faut continuer à utiliser chacune de ladite ou desdites cellules de desserte d'assistance **caractérisé en ce que** le message indique un appariement de sous-trames révisé entre la cellule de desserte cible et chacune parmi certaines de ladite ou desdites cellules de desserte d'assistance.

10. Noeud de réseau de commande permettant de déclencher un transfert entre des cellules d'un réseau de télécommunication sans fil d'accès par paquets en liaison descendante haut débit où un équipement utilisateur reçoit un flux de données sur une fréquence commune à partir d'une cellule de desserte et d'au moins une cellule de desserte d'assistance, ledit noeud contrôleur de réseau comprenant :
une logique de transmission permettant de transmettre un message à une station de base cible prenant en charge une cellule de desserte cible identifiant qu'un changement de cellule de desserte en ladite cellule de desserte cible est nécessaire et indiquant s'il faut continuer à utiliser chacune de ladite ou desdites cellules de desserte d'assistance **caractérisé en ce que** le message indique un appariement de sous-trames révisé entre la cellule de desserte cible et chacune parmi certaines de ladite ou desdites cellules de desserte d'assistance.

11. Procédé d'équipement utilisateur de déclenchement de transfert entre des cellules d'un réseau de télécommunication sans fil d'accès par paquets en liaison descendante haut débit où ledit équipement utilisateur reçoit un flux de données sur une fréquence commune à partir d'une cellule de desserte et d'au moins une cellule de desserte d'assistance, ledit procédé comprenant l'étape suivante :
recevoir un message de niveau 1 provenant d'une station de base de desserte cible prenant en charge une cellule de desserte cible ordonnant audit équipement utilisateur d'effectuer un transfert vers ladite cellule de desserte cible et indiquant s'il faut continuer à utiliser chacune de ladite ou desdites cellules de desserte d'assistance **caractérisé en ce que** le message indique un appariement de sous-trames révisé entre la cellule de desserte cible et chacune parmi certaines de ladite ou desdites cellules de desserte d'assistance.

12. Équipement utilisateur permettant de déclencher un transfert entre des cellules d'un réseau de télécommunication sans fil d'accès par paquets en liaison descendante haut débit où ledit équipement utilisateur reçoit un flux de données sur une fréquence commune à partir d'une cellule de desserte et d'au moins une cellule de desserte d'assistance, ledit équipement utilisateur comprenant :
une logique de réception permettant de recevoir un message de niveau 1 provenant d'une station de base de desserte cible prenant en charge une cellule de desserte cible ordonnant audit équipement utilisateur d'effectuer un transfert vers ladite cellule de desserte cible et indiquant s'il faut continuer à utiliser chacune de ladite ou desdites cellules de desserte d'assistance **caractérisé en ce que** ledit message indique audit équipement utilisateur un appariement de sous-trames révisé entre ladite cellule de desserte cible et chacune parmi certaines de ladite ou desdites cellules de desserte d'assistance.

13. Produit de programme informatique permettant, lorsqu'il est exécuté sur un ordinateur, d'exécuter les étapes du procédé selon l'une quelconque des revendications 1 à 7, 9 ou 11.
